# EUROPEAN PATENT APPLICATION

(11) **EP 4 650 845 A1**
(43) Date of publication of application: **19.11.2025**
(21) Application number: 25175839.7
(22) Date of filing: 12.05.2025
(51) Int. Cl.: G02B 6/44

(54) **FIBER OPTIC APPARATUS WITH CABLE SEALING ARRANGEMENT**

(30) Priority: 16.05.2024 US 202463648351 P
(71) Applicant: Corning Research & Development Corporation, Corning, New York 14831 (US)
(72) Inventor: DESARD, Christophe, 44 410 Herbignac (FR); VAN DER VELDE, Martijn Nisse, 44260 SAVENAY (FR)
(74) Representative: Reddie & Grose LLP

(57) **Abstract**

A fiber optic apparatus is provided. The fiber optic apparatus comprises a first cover member comprising a recessed base and a second cover member comprising a recessed base. The first cover member and the second cover member are configured to engage with each other to form a housing defining a storage cavity and at least two openings for receiving fiber optic cables upon first installation. Each of the first and second cover members comprise internal walls proximate to each of the at least two openings, the internal walls defining a cable pass through portion corresponding to each of the at least two openings, and for receiving fiber optic cables. The cable pass through portions are suitable for receiving a sealant material. The internal walls defining the cable pass through portions are shaped to deform away from the cable pass through portion when a cable when a cable is received therein.

## Description

### RELATED APPLICATIONS

This application claims the benefit of priority of U.S. Provisional Application Serial No. 63/648,351 filed on May 16, 2024, the content of which is relied upon and incorporated herein by reference in its entirety.

### FIELD

This disclosure relates to the field of apparatuses for fiber optic networks. In particular, the technology of the disclosure relates to fiber optic apparatuses for managing and connecting fiber optic cables, while minimizing materials and manufacturing costs.

### BACKGROUND

Fiber optic networks allow information to be transmitted via optical signals transmitted through special glass cables known as optical fibers. Compared with traditional copper wiring, optical fibers allow transmission over greater distances with substantially less signal loss, provide a greater bandwidth, and do not suffer from electrical interference. Fiber optic networks are particularly useful when providing long-distance communication and high bandwidth, so called "super-fast", broadband internet.

To maximise the benefits of fiber optic networks, optical fibers are preferably used for as much of the network as possible. In particular, many network operators are increasingly deploying fiber to the home (FTTH) networks. There is a constant and rapid development of FTTH markets worldwide, in particular in the years since the COVID-19 pandemic increasing the prevalence of home working around the world. There is a broad market need for FTTH networks, of which fiber optic enclosures (e.g., wall terminals) installed in flats and houses are a crucial part. Fiber optic outlets are widely used in the fiber to the 'X' (FTTX) part of the network and are installed directly in the end customer location. In some sites, wall outlets can be integrated with other structural elements directly in the walls. However for other sites, fiber optic outlets often need to be applied externally. As well as at the end customer location, fiber optic enclosures may be needed upstream at various points of the fiber optic network and they may be installed in a variety of different types of location.

Fiber optic storage closures provide secure and cost effective storage for optical fibers, splices, splitters and other fiber optic equipment. Such fiber closures also protect the optical fibers from becoming damaged by UV, impacts and moisture. Typical fiber closures have one or more slots for housing and retaining splice storage trays (also known as cassettes or fiber optic management trays). Fiber optic splice storage trays provide a junction between incoming and outgoing optical fibers which have been spliced together. A fiber optic splice storage tray typically has a portion for locating splices, and/or or other fiber optic components and a portion for storing excess fiber from the incoming and outgoing fibers.

In the field of optical fiber deployment, many connection boxes or fiber optic closures are deployed on the network. These fiber optic closures are typically either junction boxes, which connect two cables of identical capacity, or distribution boxes, which split an incoming single cable into two or more outgoing cables whilst maintaining the same number of incoming optical fibers as outgoing optical fibers. These fiber optic closures can be installed underground, or aerially, on a pole, a wall or a wire.

Such fiber optic apparatuses that exist in the art have a number of drawbacks. They are often large and not compact, and require a large amount of material to be manufactured. In the case of fiber optic storage closures, a large amount of plastic is required to manufacture the closure. Furthermore, in the case where a sealing gel is used to seal the closure, a large amount of gel is required to adequately seal the closure and protect the exposed cable ends and fibers housed therein. Furthermore such fiber optic closures often do not provide adequate anchoring or fixation for fiber optic cables which can lead to the fibers being connected within the closure becoming damaged.

Embodiments of the present disclosure may address one or more of these problems, amongst others.

### SUMMARY

According to an aspect, a fiber optic apparatus is provided. The fiber optic apparatus comprises a first cover member comprising a recessed base and a second cover member comprising a recessed base. The first cover member and the second cover member are configured to engage with each other to form a housing defining a storage cavity and at least two openings for receiving fiber optic cables upon first installation. Each of the first and second cover members comprise internal walls proximate to each of the at least two openings, the internal walls defining a cable pass through portion corresponding to each of the at least two openings, and for receiving fiber optic cables. The cable pass through portions are suitable for receiving a sealant material. The internal walls defining the cable pass through portions are shaped to deform away from the cable pass through portion when a cable is received therein.

Embodiments according to this aspect may provide an improved apparatus in which the cable pass through portions can be integrally formed with the first and second cover members and from the same material as the first and second cover members. Furthermore, embodiments according to this aspect can also provide an apparatus in which the amount of material required to manufacture the apparatus is reduced. In particular, the total volume of the cable pass through portions can be reduced. This is due to the fact that the cable pass through portions are shaped to deform away from the cable pass through portion when a cable is inserted into the cable pass through portion upon first installation of the cable. With such a configuration, the amount of sealant material required to seal the cable pass through portions can also be reduced. This is because the useful volume of the cable pass through portion that receives the sealant around the cable is not affected when a cable is received in the cable pass through portion, because the internal walls defining the cable pass through portion deform away from the cable pass through portions. The increased volume of the cable pass through portion created from the opposing walls being deformed away from the cable pass through portion can be occupied by the sealant material displaced by the cable itself.

Optionally, the distance between the opposing walls of each cable pass through portion increases over at least a portion of the opposing walls extending from a first side of the cover member to the second side. Optionally the distance between the opposing walls of each cable pass through portion is greatest over the region of the cable pass through portion in which the cable is received. This region may be in the middle of the cable pass through portion.

For example, the sides of the cable pass through portion may have a smaller cross sectional area than the middle of the cable pass through portion. Providing cable pass through portions in which the distance between the opposing walls increases between the sides of the cable pass through region, and is optionally greatest in the middle, can mean that the volume of sealant material can be concentrated around the middle part of the cable pass through portion in which the cable is received. Having a large volume of sealant material at the sides of the cable pass through portions is less important because this sealant material is not actively involved in creating a seal around the cable. This further helps to reduce the total amount of sealant material required to seal the apparatus. Furthermore, the opposing walls being arranged in this way ensures that they tend to deform away from the cable pass through portions due to a reduced bending resistance of this arrangement.

Optionally, the opposing walls of each cable pass through portion are V-shaped or U shaped. Other shapes, such as convex walls or stepped walls are also considered as alternatives to these V-shaped internal walls.

This can help to ensure that the internal walls defining the cable pass through portions deform away from the cable pass through portion when a cable when a cable is received therein. In particular, the middle of the of the cable pass through portion, which corresponds to the 'peak' of the V-shape naturally forms a line of weakness in the internal walls of the cable pass through portion.

Optionally, the internal walls of each cable pass through portion comprise at least one region of weakness, at or proximate the region of the cable pass through portion at which the cable is received. In particular, this may be at the middle of the cable pass through portion. This can ensure that the internal walls defining the cable pass through portions deform away from the cable pass through portion when a cable is received therein. A region of weakness may be created by perforations formed in the material, for example, although other manners of introducing a controllable weakness into the material may be used as appropriate, such as making the region of weakness thinner than the surrounding material or other techniques for making said region frangible. In particular, the region of weakness may be provided in the form or a line of weakness.

Providing internal walls of each cable pass through portion comprising at least one region of weakness at or proximate the middle of the cable pass through portion can further help to ensure that the internal walls defining the cable pass through portions deform away from the cable pass through portion when a cable when a cable is received therein.

Optionally, the internal walls are integrally formed with the first and second cover members.

Providing internal walls which are integrally formed with the first and second cover member can simplify the manufacturing and assembly of the fiber optic apparatus. In particular, the first and second cover members and their corresponding internal walls can be manufactured as a single unit. The internal walls can be manufactured from the same material as the rest of the first and second cover members. This in turn can save costs as fewer manufacturing steps and/or materials are required to manufacture the apparatus.

Optionally, at least the first cover member comprises a sealing channel around a periphery of the storage cavity, the sealing channel being connected to the cable pass through portions of the at least one cover member. Optionally, the sealing channel is suitable for receiving a sealant material.

The sealing channel can provide a seal around the entire fiber optic apparatus which can prevent the ingress of moisture which could damage the contents of the apparatus.

Optionally, at least one of the cover members comprises a peripheral wall configured to extend into the sealing channel of the other cover member to compress a sealant material contained therein, when the first and second cover members are engaged.

The peripheral wall of the at least one cover member may engage with the sealant material received in the sealing channel of the other cover member to create a seal which can further prevent the ingress of moisture which could damage the contents of the apparatus.

Optionally, the fiber optic apparatus is a fiber optic closure.

Optionally, the first cover member and the second cover member are joined by at least one hinge and are movable between a first open position and a second closed position about the at least one hinge.

This arrangement can mean that the first and second cover members can be kept together, reducing the likelihood of one cover member being lost by an operator. Furthermore, this arrangement can ensure precise alignment of the first cover member with the second cover member when the two are closed.

Optionally, the at least one hinge is a living hinge.

The provision of a living hinge means that the first and second cover members are formed from a single piece of material. Living hinges are an easy and relatively cheap solution to providing a hinge which benefits from the advantages described above.

Optionally, the base of at least one of the cover members has an undulating profile in its corresponding pass through portion whereby the height of the base varies over the pass through portion. In particular the undulating profile may be a waved profile.

Providing the base of the cover member in an undulating profile, such as a waved profile. In the cable pass through portion can further help to reduce the amount of material required to manufacture the apparatus. In particular, the total volume of the cable pass through portions can be reduced. Such an arrangement also allows the amount of sealant material required to seal the cable pass through portions to also be reduced.

Optionally, at least one of the cable pass through portions of one cover member has an internal rib extending from the base of the cover member. Optionally, the internal rib extends at least partially along the height of the internal walls defining the at least one cable pas through portion. Optionally, the internal rib may have an undulating profile.

Providing an internal rib as set out above can improve the stiffness of the cable pass through portion and reduce the amount of sealant material required to seal a cable in the cable pass through portion. Furthermore, the internal rib can increase the contact area between the sealant gel, when inserted into the cable pass through portion, and the cover member to. This in turn can help to improve the fixation of the sealant material within the cable pass through portion.

Optionally, the distance between the base of the at least one cover member and the top of the internal walls increases over at least a portion of the opposing walls extending from a first side of the cover member to the second side. Optionally the distance between the base of the at least one cover member and the top of the internal walls is greatest over the region of the cable pass through portion in which the cable is received. This region may be in the middle of the cable pass through portion such that the distance is greatest in the middle of the cable pass through portion.

This arrangement can allow a greater volume of sealant material to be present in the region of the cable pass through portion where a cable is configured to be received. For example, this may be in the middle. This in turn provides good sealing of the cable while reducing the total amount of sealant material required.

Optionally, at least a portion of the internal walls proximate the region of the cable pass through portion where a cable is configured to be received is between 0.05 millimeters and 0.5 millimeters thick and in particular may be 0.1 millimeters thick or thereabouts. In particular, at least a portion of the internal walls proximate the middle of the cable pass through portion may be between 0.05 millimeters and 0.5 millimeters thick and in particular may be 0.1 millimeters thick or thereabouts.

Providing at least a portion of the internal walls having these dimensions ensures that the internal walls deform when a cable is inserted in the cable pass through portion.

Optionally, at least the first cover member comprises a passage corresponding to each opening for receiving a fiber optic cable, the passages are configured to receive a means or mechanism for fixing the fiber optic cables relative to first cover member.

The provision of a passage corresponding to each opening for receiving a fiber optic cable enables a mechanism for fixing said fiber optic cable to be inserted and wrapped around the fiber optic cable to hold it in place. The provision of these passages may therefore facilitate the fixation of the fiber optic cable to prevent relative movement between the cable and the apparatus.

Optionally, at least the first cover member comprises a cable anti-rotation mechanism corresponding to each opening for receiving a fiber optic cable.

The cable anti-rotation mechanism can reduce or entirely prevent rotation of the cable with respect of the fiber optic apparatus. This in turn can minimize damage to the cable or the optical fibers housed within the cable. Such an anti-rotation mechanism is particularly effective in preventing rotation or twisting of the cable when the cable is being fixed to the fiber optic apparatus by way of a fixing mechanism inserted through the passages corresponding to each opening for receiving a fiber optic cable.

Optionally, the anti-rotation mechanism comprises at least one protrusion, such as a tooth, configured to engage with an outer sheath of the cable. The anti-rotation mechanism may comprise a plurality of such protrusions.

The provision of an anti-rotation mechanism in the form of tooth has been found to optimise the resistance to rotation or twisting of a cable inserted into the fiber optic apparatus. In particular, the teeth may engage with the outer sheath of the cable by at least partially cutting into the cable sheath.

Optionally, the storage cavity is sized to receive at least one fiber optic tray.

Such a configuration can mean that the fiber optic apparatus can be used in conjunction with one or more fiber optic trays which are know means for facilitating connections between optical fibers. This in turn can mean that the fiber optic apparatus can be used in conjunction with off-the shelf components and does not require customised componentry. This further reduces the cost associated with the use of fiber optic apparatuses according to this aspect.

Optionally, the first cover member comprises a fixing mechanism for fixing a fiber optic tray relative to the first cover member. Optionally, the fixing mechanism is provided on an inner surface of the first cover member.

Providing a fixing mechanism for fixing a fiber optic tray relative to the container removes allows a fiber optic tray to be securely housed within the fiber optic apparatus, preventing any relative movement between the tray and the apparatus. This in turn can help to protect the optical fibers housed within the apparatus.

Optionally, the fixing mechanism comprises at least one arm extending from the base of the first cover member. Optionally, the at least one arm extending from the base is integrally formed with the first cover member.

Optionally, the first cover member comprises an optical fiber routing portion in the storage cavity.

This optical fiber routing portion can help to guide the optical fibers within the apparatus and prevent them from inadvertently being guided out of the apparatus.

Optionally, the first cover member comprises at least one aperture for receiving a fiber optic cable clamp.

Providing an aperture for receiving a fiber optic cable clamp can provide a means to improve anchoring of a fiber optic cable. In general fiber optic cables have a reinforcing member present to provide the required tensile strength to the cable. Providing an aperture for receiving a fiber optic cable clamp can enable an operator to more securely fix a fiber optic cable reinforcing member when the clamping element is tightened.

Optionally, the first and second cover members are molded from a plastic material.

Molding the first and second cover members from a plastic material may reduce the costs associated with manufacturing the cover members as these can be manufactured cheaply and in high quantities from low cost materials.

Optionally, one of the first or second cover members further comprises a mount for mounting the apparatus to a structure.

The mount can allow a belt, cable tie or other mounting mechanism to engage with the apparatus such that it can be fitted to a structure. This can improve the accessibility of the apparatus by an operator or help with the organization of the apparatus within a fiber optic network.

Optionally, the first cover member comprises a first engaging mechanism for engaging with a corresponding second engaging mechanism of the second cover member.

This can prevent unwanted opening of the apparatus which could lead to the optical fibers housed therein becoming damaged.

Optionally, the second engaging mechanism is a clip and the first engaging mechanism is a counter clip.

Additional features and advantages will be set forth in the detailed description which follows, and in part will be readily apparent to those skilled in the art from that description or recognized by practicing aspects of the disclosure as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The embodiments of the disclosure will be described with respect to the Figures, in which:
Figure 1 illustrates a perspective top view of a fiber optic closure according to an aspect;
Figure 2 illustrates a perspective bottom view of a fiber optic apparatus according to an aspect;
Figure 3 illustrates a top perspective view of a fiber optic apparatus according to an aspect with a fiber optic splice storage tray housed therein;
Figure 4 illustrates a detailed view of a cable anti-rotation mechanism of a fiber optic cable apparatus according to an aspect;
Figure 5 illustrates a top view of a fiber optic apparatus according to an aspect with two cables inserted.

Like components across different figures are represented by like reference numerals.

### DETAILED DESCRIPTION

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

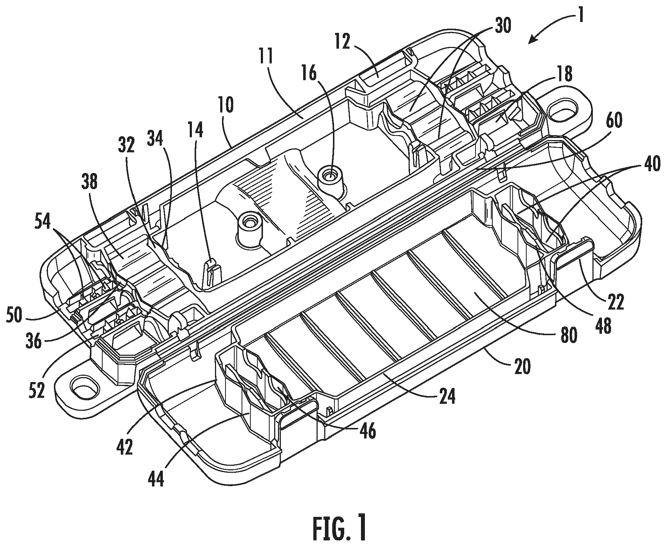

Figure 1 illustrates a perspective top view of a fiber optic closure 1 according to an aspect. The fiber optic apparatus 1 of this aspect is a fiber optic closure. The fiber optic closure 1 includes a first cover member 10 and a second cover member 20 that define an interior of the fiber optic closure 1 for housing telecommunications components such as fiber optic trays, splices, passive optical power splitters, wavelength division multiplexers, optical taps, fiber optic adapters, fiber optic connectors, fiber management cassettes, cable loop storage locations, and other components. It will be appreciated by a skilled person that certain features of the first and second cover members 10, 20 described below are interchangeable between the first and second cover members 10, 20. Figure 1 shows the first and second cover members 10, 20 in an open position in which the first and second cover members are separated from one another to provide access to the interior of the closure 1. However, when the first and second cover members 10, 20 are in a closed position (e.g., mounted, secured, latched) together, the interior of the closure is preferably sealed from the ingress of moisture or debris.

In the embodiment of Figure 1, the first and second cover members 10, 20 are connected together by a living hinge 60 that allows the cover members to be pivoted between their open and closed positions. Other types of hinges can also be used. In still other examples, the first cover member 10 and the second cover member 20 can be separate pieces configured to disconnect from one another when the closure 1 is opened. In certain examples, the first and second cover members 10, 20 can be secured in the closed position by an engaging mechanism such as latches, clamps, fasteners or the like. In the example of Figure 1, the first and second cover members 10, 20 can be secured together by clips 22 and corresponding counter clips 12 positioned opposite the hinge 60. Although in this example embodiment, two clips 12 are shown, it will be appreciated that one clip or more than two clips may also be used. When the closure 1 is in the closed position, the first and second cover members 10, 20 define openings 50 in the closure 1 for receiving fiber optic cables. In this example embodiment, the closure 1 has four openings 50. However, it will be appreciated that the closure 1 may have any number of openings 50.

In the example embodiment of Figure 1, the closure 1 has a molded plastic construction. A perimeter sealing arrangement of the closure 1 is configured to provide sealing between the first and second cover members 10, 20 about the perimeter of the closure 1 when the first and second cover members 10, 20 are fitted together. The perimeter sealing arrangement includes sealant material receiving regions defined by the first and second cover members 10, 20. The sealant material receiving regions include cable pass through portions 30, 40 in the first and second cover members 10, 20 respectively.

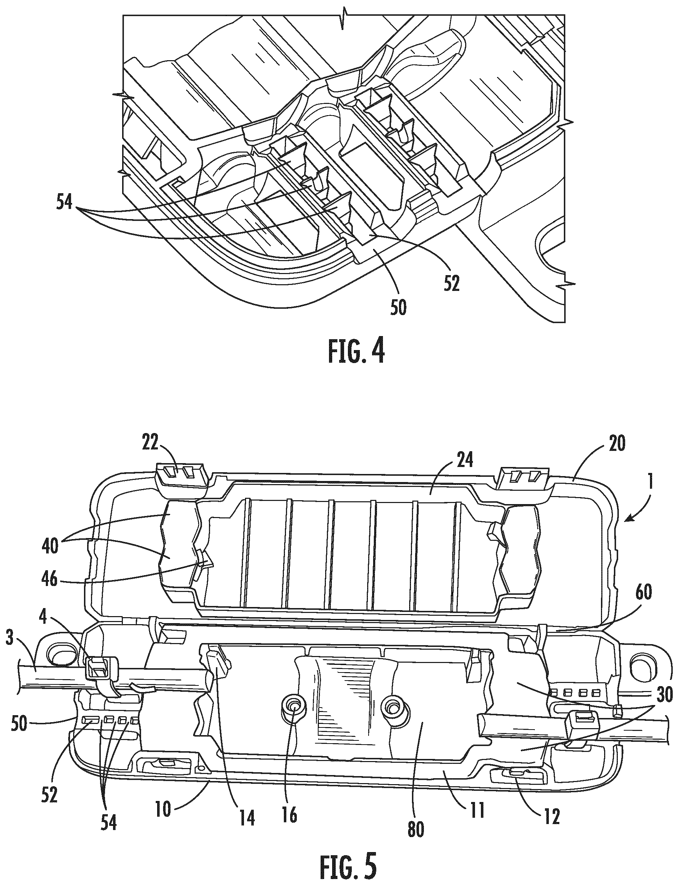

The cable pass through portions 30, 40 are formed from upstanding internal walls of the cover members and are suitable for receiving fiber optic cables (as will be described in more detail below in respect of Figure 5). The internal walls of the cable pass through portions 30, 40 are shaped to deform away from a cable pass through portion, when a cable is received therein. In this example embodiment, the internal walls 32, 42 of the cable pass through portion are angled to form a V-shape such that the distance between the internal walls 32, 42 at the middle part of the cable pass through portions 30, 40 is greater than at the sides of the cable pass through portions 30, 40. Other shapes, such as convex walls or stepped walls are also considered as alternatives to the V-shaped internal walls 32, 42.

In this example embodiment, the internal walls 32, 42 optionally also have regions of weakness 34, 44 to promote deformation of the walls. In this example the regions of weakness are provided in the form of lines of weakness. Other embodiments according to this aspect may have more lines of weakness than shown in Figure 1. As shown in Figure 1, in addition to, or alternatively to providing regions of weakness, the internal walls 32, 42 also have a thinner top portion 36, 46 which further helps to promote deformation of the walls of the cable pass through portions 30, 40 when a cable is received therein. The base of the first cover members 10 may have an undulating profile such as waved profile 38 in the cable pass through portions 20. Any suitable other profile of base suitable for minimizing the volume of sealant material required may also be applicable to this embodiment. It is also envisaged that the cable pass through portions 30 of the second cover member 20 may also have a base with an undulating profile. In the example embodiment of Figure 1, the cable pass through portions of the second cover member have an internal rib 48 extending from the base and between the walls of the cable pass through portion. The internal rib 38 is shown as having an undulating profile, such as a waved profile, along the upper edge. Any suitable other profile of the internal rib suitable for increasing the stiffness of the cable pass through portion and increasing the surface area of contact between the sealant material and the cable pass through portion may also be applicable to this embodiment.

As further shown in Figure 1, the closure 1 has two apertures 16 for receiving fiber optic cable clamps. The apertures 16 can be threaded for receiving a screw or threaded shaft, or alternatively the apertures 16 can be unthreaded and configured to receive other forms of fiber optic cable clamps. The fiber optic cable clamps which can be received in the apertures 16 are configured to anchor fiber optic cable reinforcement members such as aramid meshes, or one or more rods made from one of a polymer, a metal or glass fibers. Although two apertures are shown in Figure 1, any number of apertures 16 may be used depending on the number of fiber optic cables received in the closure 1.

The perimeter sealing arrangement further includes a sealing channel 11 in the first cover member 10, defined by internal walls of the cover member 10. The sealing channel 11 is suitable for receiving a sealant material. In the example embodiment of Figure 1, the cable pass through portions 30 of the first cover member 10 are fluidly connected to the sealing channel 11. The sealing channel 11 and cable pass through portions 30 together extend around the entire periphery of the first cover member 10. The second cover member 20 includes a peripheral wall 24 which is configured to project into the sealing channel 11 of the first cover member 10 to create a seal, when the first and second cover members 10, 20 are fitted together and the closure 1 is closed. The internal walls 42 of the cable pass through portions 42 of the second cover member 20 are arranged to project into the cable pass through portions 30 of the first cover member 10 to create a seal when the first and second cover members 10, 20 are fitted together and the closure 1 is closed.

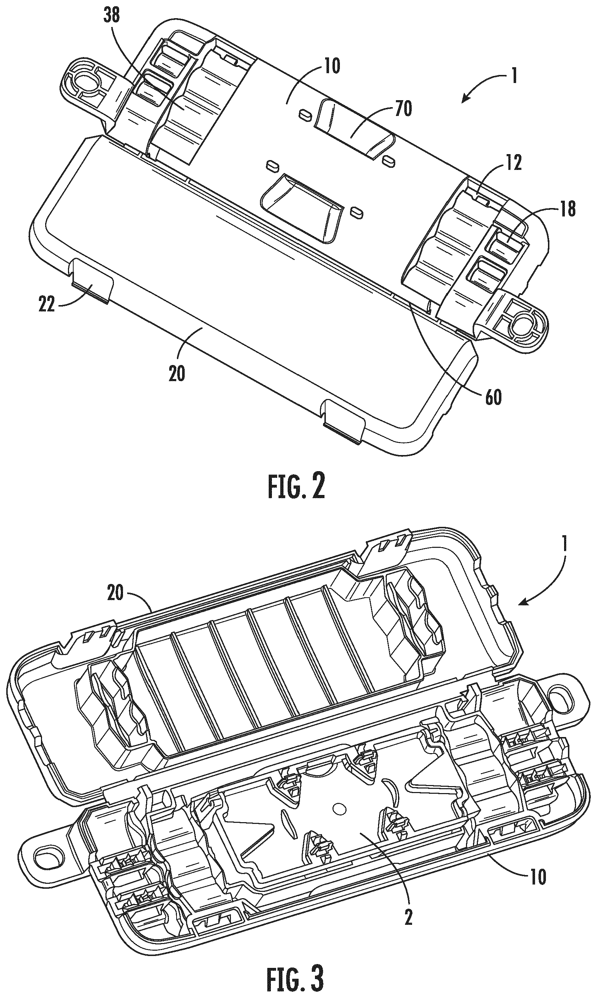

The closure 1 further includes fixing mechanisms 14 for fixing a fiber optic tray relative to the closure 1. In this example embodiment two fixing mechanisms are provided. The fixing mechanisms 14 are in the form of arms which are integrally formed with the closure 1 and configured to receive protrusions of the fiber optic tray as will be described in more detail below in respect of Figure 3.

As shown in Figure 1, the first cover member 10 of further comprises cable guides 52 at each of the openings 50. The first cover member further includes passages 18 corresponding to each of the cable guides 52. The passages 18 are in the form of apertures on either side of the cable guide 52. As illustrated in Figure 1, the passages 18 of each cable guide may share an aperture when the cable guides 52 are adjacent one another. The passages allow a mechanism for fixing the cables to be wrapped or tied around the cables to fix them within the cable guides 52. The cable guides 52 include teeth 54 which act as an anti-rotation mechanism for the cable. In other words, the teeth 54 engage with the cable by cutting into the cable sheath to reduce or prevent rotation of the cable. It will be appreciated by a skilled person that any number of teeth 54 may be present in each cable guide and that suitable alternatives to teeth may also be used such as for example pins or other shapes of protrusion.

As also shown in Figure 1, the first cover member 10 includes an optical fiber routing portion 80 in the storage cavity of the closure 1. In this embodiment the fiber optic routing portion is in the form of a protrusion which extends into the storage cavity from a side edge of the internal wall defining the sealing channel 11.

Figure 2 illustrates a perspective bottom view of a fiber optic apparatus 1 according to an aspect. Features of the fiber optic apparatus 1 already described in respect of Figure 1 are not repeated. This figure illustrates the mount 70 for mounting the fiber optic apparatus to a structure such as, for example, a wall. In this example embodiment, the mount is in the form of a passage in the back of the first cover member 10, the passage being configured to receive a belt or tie.

Figure 3 illustrates a top perspective view of a fiber optic apparatus 1 according to an aspect with a fiber optic splice storage tray 2 housed therein. Features of the fiber optic apparatus 1 already described in respect of Figure 1 may be present and are not repeated. Figure 3 shows how the protrusions of the fiber optic storage tray 2 engage with the fixing mechanism 14 of the fiber optic apparatus. In this example embodiment, the fiber optic storage tray is pivotable within the fiber optic apparatus 1 about the protrusions.

Figure 4 illustrates a detailed view of a cable anti-rotation mechanism of a fiber optic cable apparatus 1 according to the first aspect. Features of the fiber optic apparatus 1 already described in respect of Figure 1 may be present and are not repeated. This detailed view of the cable guides 52 shows the profile of the teeth 54 in this example embodiment. The teeth have a sharp top edge which allows them to engage with the outer sheath of the cable. In this example embodiment, the cable guides comprise three equally spaced teeth 54. However, it will be appreciated that the cable guides may have only one tooth, two teeth or more than three teeth and that any suitable spacing may be used. It will be appreciated by a skilled person that the cable anti-rotation mechanism of the apparatus 1 can be considered in isolation and applied to other uses.

Figure 5 illustrates a top view of a fiber optic apparatus 1 according to an aspect with two cables inserted. Features of the fiber optic apparatus 1 already described in respect of Figure 1 are not repeated. In Figure 5, the cable pass through portions 30, 40 and the sealing channel 11 are filled with a sealant material, which in this case is a gel. Cables 3 are routed through the cable pass through portions 30 and when the closure is in a closed position, the cable pass through portions 30, 40 seal the open end of the cable 3 within the storage cavity of the closure 1.

To route one of the cables 3 into the closure 1, the closure 1 is opened as shown in Figures 1 and 5, and the cable 3 is laid along the cable pass through portions 30 and the surface of the gel contained within the cable pass through portions 30. Once the cables 3 are laid over the gel, the closure 1 can be closed such that the cable 3 is captured between the gel in the cable pass through portions 30 of the first cover member 10 and the cable pass through portions 40 of the second cover member. As the closure 1 is closed, the gel in the cable pass through portions deforms to conform with the exterior of the cable 3. During closing of the first and second cover members about the cable 3, the thinner top portions 36, 46 of the internal walls 32, 42 also deform away from the cable pass through portion to receive the cable 3 and to accommodate displacement of excess gel. In the example embodiment of Figure 5, the thinner top portions 36, 46 of the internal walls 32, 42 break along their respective lines of weakness 34, 44 and deform away from the cable pass through portion. When the closure 1 is closed, the peripheral wall 24 of the second cover member 24 is configured to project into the gel contained in the sealing channel 11 of the first cover member 10 to seal the perimeter of the storage cavity of the closure 1.

When the closure 1 is closed, the first and second cover members 10, 20 can be secured together in the closed position by engaging the clips 22 of the second cover member 20 with their corresponding counter clips 12 of the first cover member 10. The clip arrangement can retain the cable pass through portions 30, 40 in close proximity to one another such that the gel contained therein is adequately pressurized to effectively conform about the cable 3 and form a seal.

The sealant material for the closure of the aspect shown in Figures 1 to 5 may be provided in the form of pre-shaped pieces of gel that are located in the cable pass through portions and the sealing channel 11. Alternatively, the sealant material may be provided in liquid form, in which case it is poured into the cable pass through portions 30, 40 and the sealing channel 11 and cured to a gel-like consistency before use. Any tendency for the liquid sealant material to overflow from the cable pass through portions and the sealing channel can be limited by using a high viscosity sealant material with a short curing time.

As can be seen in Figure 5, the fiber optic cables are held in place by cable ties 4 which act as a fixing mechanism for the cables and retain them in place in the cable guides 52. It will be appreciated by a person skilled in the art that alternative fixing mechanism for the cables 3 are also envisaged and within the scope of this aspect.

As used herein, the terms "fiber optic cables" and/or "optical fibers" include all types of single mode and multi-mode light waveguides, including one or more optical fibers that may be upcoated, colored, buffered, ribbonized and/or have other organizing or protective structure in a cable such as one or more tubes, strength members, jackets or the like. Likewise, other types of suitable optical fibers include bend-insensitive optical fibers, or any other expedient of a medium for transmitting light signals. An example of a bend-insensitive optical fiber is ClearCurve^{®} Multimode fiber commercially available from Corning Incorporated.

It is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

Particular aspects of the disclosure are set out in the following numbered clauses:
Clause 1. A fiber optic apparatus comprising:
   a first cover member comprising a recessed base;
   a second cover member comprising a recessed base;
   wherein the first cover member and the second cover member are configured to engage with each other to form a housing defining a storage cavity and at least two openings for receiving fiber optic cables upon first installation;
   wherein at least one of the first and second cover members comprise internal walls proximate to each of the at least two openings, the internal walls defining a cable pass through portion corresponding to each of the at least two openings, the cable pass through portion being configured to receive fiber optic cables;
   wherein the cable pass through portions are suitable for receiving a sealant material;
   wherein the internal walls defining the cable pass through portions are shaped to deform away from the cable pass through portion when a cable is received therein.
Clause 2. A fiber optic apparatus according to clause 1, wherein the distance between the opposing walls of each cable pass through portion is greatest in the middle of the cable pass through portion.
Clause 3. A fiber optic apparatus according to clause 2, wherein the opposing walls of each cable pass through portion are V-shaped or U-shaped.
Clause 4. A fiber optic apparatus according to any preceding clause, wherein the internal walls of each cable pass through portion comprise at least one region of weakness, at or proximate the middle of the cable pass through portion.
Clause 5. A fiber optic apparatus according to any preceding clause, wherein the internal walls are integrally formed with the first and second cover members.
Clause 6. A fiber optic apparatus according to any preceding clause, wherein at least the first cover member comprises a sealing channel around a periphery of the storage cavity, the sealing channel being connected to the cable pass through portions of the at least one cover member; and
   wherein the sealing channel is suitable for receiving sealant material.
Clause 7. A fiber optic apparatus according to clause 6, wherein at least one of the cover members comprises a peripheral wall configured to extend into the sealing channel of the other cover member to compress a sealant material contained therein, when the first and second cover members are engaged.
Clause 8. A fiber optic apparatus according to any preceding clause, wherein the fiber optic apparatus is a fiber optic closure.
Clause 9. A fiber optic apparatus according to any preceding clause, wherein the first cover member and the second cover member are joined by at least one hinge and are movable between a first open position and a second closed position about the hinge.
Clause 10. A fiber optic apparatus according to clause 9, wherein the at least one hinge is a living hinge.
Clause 11. A fiber optic apparatus according to any preceding clause, wherein the base of at least one of the cover members has a waved profile in the cable pass through portions.
Clause 12. A fiber optic apparatus according to clause 11, wherein the distance between the base of the at least one cover member and the top of the internal walls is greatest in the middle of the cable pass through portion.
Clause 13. A fiber optic apparatus according to any preceding clause, wherein at least a portion of the internals walls proximate the middle of the cable pass through portion is between 0.05 millimeters and 0.5 millimeters thick.
Clause 14. A fiber optic apparatus according to clause 13, wherein at least a portion of the internals walls proximate the middle of the cable pass through portion is around 0.1 millimeters thick.
Clause 15. A fiber optic apparatus according to any preceding clause, wherein at least the first cover member comprises a passage corresponding to each opening for receiving a fiber optic cable, the passages configured to receive a mechanism for fixing the fiber optic cables relative to first cover member.
Clause 16. A fiber optic apparatus according to any preceding clause, wherein at least the first cover member comprises a cable anti-rotation mechanism corresponding to each opening for receiving a fiber optic cable.
Clause 17. A fiber optic apparatus according to clause 16, wherein the anti-rotation mechanism comprises at least one tooth configured to engage with an outer sheath of the cable.
Clause 18. A fiber optic apparatus according to any preceding clause, wherein the storage cavity is sized to receive at least one fiber optic tray.
Clause 19. A fiber optic apparatus according to any preceding clause, wherein the first cover member comprises a fixing mechanism for fixing a fiber optic tray relative to the first cover member.
Clause 20. A fiber optic apparatus according to clause 18, wherein the fixing mechanism comprises at least one arm extending from the base of the first cover member.
Clause 21. A fiber optic apparatus according to any preceding clause, wherein the first cover member comprises an optical fiber routing portion in the storage cavity.
Clause 22. A fiber optic apparatus according to any preceding clause, wherein the first cover member comprises at least one aperture for receiving a fiber optic cable clamp.
Clause 23. A fiber optic apparatus according to any preceding clause, wherein the first and second cover members are molded from a plastic material.
Clause 24. A fiber optic apparatus according to any preceding clause, wherein one of the first or second cover members further comprises a mount for mounting the apparatus to a structure.
Clause 25. A fiber optic apparatus according to any preceding clause, wherein the first cover member comprises a first engaging mechanism for engaging with a corresponding second engaging mechanism of the second cover member.
Clause 26. A fiber optic apparatus according to clause 25, wherein the second engaging mechanism is a clip and the first engaging mechanism is a counter clip.

## Claims

1. A fiber optic apparatus comprising:
a first cover member comprising a recessed base;
a second cover member comprising a recessed base;
wherein the first cover member and the second cover member are configured to engage with each other to form a housing defining a storage cavity and at least two openings for receiving fiber optic cables upon first installation;
wherein at least one of the first and second cover members comprise internal walls proximate to each of the at least two openings, the internal walls defining a cable pass through portion corresponding to each of the at least two openings, the cable pass through portion being configured to receive fiber optic cables;
wherein the cable pass through portions are suitable for receiving a sealant material;
wherein the internal walls defining the cable pass through portions are shaped to deform away from the cable pass through portion when a cable is received therein.

2. A fiber optic apparatus according to claim 1, wherein the distance between the opposing walls of each cable pass through portion is greatest in the middle of the cable pass through portion.

3. A fiber optic apparatus according to claim 2, wherein the opposing walls of each cable pass through portion are V-shaped or U-shaped.

4. A fiber optic apparatus according to claim 1, wherein the internal walls of each cable pass through portion comprise at least one region of weakness, at or proximate the middle of the cable pass through portion.

5. A fiber optic apparatus according to claim 1, wherein the internal walls are integrally formed with the first and second cover members.

6. A fiber optic apparatus according to claim 1, wherein at least the first cover member comprises a sealing channel around a periphery of the storage cavity, the sealing channel being connected to the cable pass through portions of the at least one cover member; and
wherein the sealing channel is suitable for receiving sealant material.

7. A fiber optic apparatus according to claim 6, wherein at least one of the cover members comprises a peripheral wall configured to extend into the sealing channel of the corresponding cover member to compress a sealant material contained therein, when the first and second cover members are engaged.

8. A fiber optic apparatus according to claim 1, wherein the fiber optic apparatus is a fiber optic closure.

9. A fiber optic apparatus according to claim 1, wherein the first cover member and the second cover member are joined by at least one hinge and are movable between a first open position and a second closed position about the hinge.

10. A fiber optic apparatus according to claim 9, wherein the at least one hinge is a living hinge.

11. A fiber optic apparatus according to claim 1, wherein the base of at least one of the cover members has a waved profile in the cable pass through portions.

12. A fiber optic apparatus according to claim 1, wherein the distance between the base of the at least one cover member and the top of the internal walls is greatest in the middle of the cable pass through portion.

13. A fiber optic apparatus according to claim 1, wherein at least a portion of the internals walls proximate the middle of the cable pass through portion is between 0.05 millimeters and 0.5 millimeters thick.

14. A fiber optic apparatus according to claim 13, wherein at least a portion of the internals walls proximate the middle of the cable pass through portion is around 0.1 millimeters thick.

15. A fiber optic apparatus according to claim 1, wherein at least the first cover member comprises a passage corresponding to each opening for receiving a fiber optic cable, each passage is configured to receive a mechanism for fixing the fiber optic cables relative to the first cover member.
